(19) Europäisches Patentamt / European Patent Office / Office européen des brevets

(11) **EP 3 984 891 B1**

(12) **EUROPEAN PATENT SPECIFICATION**

(45) Date of publication and mention
of the grant of the patent:
**15.02.2023 Bulletin 2023/07**

(21) Application number: **21202686.8**

(22) Date of filing: **14.10.2021**

(51) International Patent Classification (IPC):
**B64G 1/10** (1968.09)          **G06T 7/00** (1995.01)
**G08G 3/00** (1968.09)          **H04N 5/232** (1985.01)

(52) Cooperative Patent Classification (CPC):
**B64G 1/1021; H04N 23/60;** B64G 2001/1028

(54) **SATELLITE IMAGING ACQUISITION RE-PLANNING METHOD AND APPARATUS USING SHIP AUTOMATIC IDENTIFICATION INFORMATION**

VERFAHREN UND VORRICHTUNG ZUR NEUPLANUNG DER SATELLITENBILDERFASSUNG MITHILFE VON AUTOMATISCHEN SCHIFFSIDENTIFIKATIONSINFORMATIONEN

PROCÉDÉ DE REPLANIFICATION D'ACQUISITION D'IMAGERIE SATELLITE ET APPAREIL UTILISANT DES INFORMATIONS D'IDENTIFICATION AUTOMATIQUE DE NAVIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2020 KR 20200132799**

(43) Date of publication of application:
**20.04.2022 Bulletin 2022/16**

(73) Proprietor: **Korea Aerospace Research Institute Daejeon 34133 (KR)**

(72) Inventor: **LEE, Seon Ho**
**34020 Daejeon (KR)**

(74) Representative: **Qip Patentanwälte**
**Dr. Kuehn & Partner mbB**
**Goethestraße 8**
**80336 München (DE)**

(56) References cited:
**WO-A1-2017/048339          WO-A1-2020/091159**
**WO-A2-2014/121197**

- **SHAO TAI-YUAN ET AL: "Taiwan AIS CubeSat Tracking System for Marine Safety", 2019 INTERNATIONAL CONFERENCE ON INTELLIGENT COMPUTING AND ITS EMERGING APPLICATIONS (ICEA), IEEE, 30 August 2019 (2019-08-30), pages 70-73, XP033625949, DOI: 10.1109/ICEA.2019.8858312 [retrieved on 2019-10-03]**
- **JOHNSON GREGORY ET AL: "Sharing Ships' Weather Data via AIS", GNSS 2019 - PROCEEDINGS OF THE 32ND INTERNATIONAL TECHNICAL MEETING OF THE SATELLITE DIVISION OF THE INSTITUTE OF NAVIGATION (ION GNSS+ 2019), THE INSTITUTE OF NAVIGATION, 8551 RIXLEW LANE SUITE 360 MANASSAS, VA 20109, USA, 20 September 2019 (2019-09-20), pages 1598-1612, XP056015558,**

## Description

BACKGROUND

1. Field of the Invention

One or more example embodiments relate to a method and apparatus for satellite imaging acquisition re-planning using ship automatic identification information to re-plan an imaging acquisition by a satellite based on ship automatic identification information generated for identifying a position of a fishing vessel.

More particularly, the present disclosure provides the method and apparatus for satellite imaging acquisition re-planning using ship automatic identification information to modify an imaging acquisition plan by estimating a weather condition in a target area to be imaged in consideration of a distribution of ships operating apart from inland.

2. Description of the Related Art

Recently, a flight operation of a satellite cluster in a form of a satellite constellation such as multi-orbit, multi-satellite, and multi-payload has been trending.

A representative satellite payload may include an electro-optic (EO) camera with super-resolution (an observation range of up to ten kilometers), an infrared (IR) camera for detecting (an observation range of up to ten kilometers) heating status or operating status, and a synthetic aperture radar (SAR) for an all-weather purpose (5 to 100 km).

When an imaging acquisition plan for a satellite is established, a ground control station may estimate an orbit 24 to 48 hours prior to imaging a target area inside and outside a country and may transmit a command to the satellite.

In response to a request for imaging the target area, an imaging acquisition may be planned based on a point in time for imaging, a requested satellite, and a parameter of a ground station operation by confirming current status and orbit of the satellite by the ground control station.

The satellite may automatically perform imaging according to the command transmitted based on a pre-established imaging acquisition plan even under an occurrence of deteriorating weather conditions such as an occurrence of a cloud at a time of imaging.

The imaging under the deteriorating weather condition may cause an issue of obtaining an invalid image in case of the EO camera.

Accordingly, there is a demand for a model to enable imaging under improved circumstances by determining a weather condition in real time by a satellite itself without a support of the ground control station and re-establishing an imaging acquisition plan immediately prior to imaging.

WO 2017/048339 A1 discloses systems and methods for remote sensing of the earth from space, wherein AIS information is used on a satellite for improving tracking of ships.

SUMMARY

Example embodiments provide a method and apparatus for satellite imaging acquisition re-planning using ship automatic identification information to recognize a necessity for imaging acquisition re-planning in a satellite by estimating a weather condition in a target area based on identifying a current moving status of ships by analyzing the ship automatic identification information in real time.

Example embodiments provide a method and apparatus to perform imaging acquisition re-planning by a satellite itself by estimating a deteriorating weather condition in predetermined sea waters when, as a result of analyzing ship automatic identification information, a moving status of ships in operation is determined that no ships are in operation or a small number of ships are in operation in the predetermined sea waters which is a target area.

In addition, example embodiments provide a method and apparatus to maximize an autonomy of utilizing an available payload of a satellite/satellite constellation by weather conditions.

According to the invention, claim 1 provides a method for satellite imaging acquisition re-planning using ship automatic identification information, the method including, upon arrival of a point in time for imaging a target area based on an imaging acquisition plan set in a satellite, collecting automatic identification system (AIS) information of a ship generated in the target area, estimating a weather condition in the target area by analyzing the AIS information, and performing an imaging acquisition re-planning when it is determined that imaging by an electro-optic (EO) camera is impossible under the estimated weather condition.

According to the invention, claim 6 provides an apparatus for satellite imaging acquisition re-planning using ship automatic identification information comprising collector configured to collect, upon arrival of a point in time for imaging a target area based on an imaging acquisition plan set in a satellite,

AIS information of a ship generated in the target area, a processor configured to estimate a weather condition in the target area by analyzing the AIS information, and a re-planning unit configured to perform an imaging acquisition re-planning when it is determined that imaging by an EO camera is impossible under the estimated weather condition.

Additional aspects of example embodiments will be set forth in the dependent claims.

In addition, as a result of the analyzing the ship automatic identification information, if a moving status of ships is determined that no ships are in operation or a small number of ships is in operation in predetermined sea waters which is the target area, the satellite itself performs the imaging acquisition re-planning by estimating a deteriorating weather condition in predetermined sea waters.

In addition, an autonomy of utilizing an available payload of the satellite/a satellite constellation by weather conditions may be maximized.

BRIEF DESCRIPTION OF THE DRAWINGS

These and/or other aspects, features, and advantages of the invention will become apparent and more readily appreciated from the following description of example embodiments, taken in conjunction with the accompanying drawings of which:

    FIG. 1 is a block diagram illustrating a configuration of an apparatus for satellite imaging acquisition re-planning using ship automatic identification information according to an example embodiment;
    FIGS. 2A and 2B are diagrams illustrating examples of a valid reception range of a satellite-mounted automatic identification system (AIS) and AIS observation data of the Korean peninsula;
    FIG. 3 is a diagram illustrating a process of satellite imaging acquisition re-planning;
    FIGS. 4A, 4B, and 4C are diagrams illustrating coherence with weather conditions based on AIS information according to an example embodiment;
    FIGS. 5A, 5B, and 5C are diagrams illustrating in-operation ship distributions based on in-operation ship observation information according to an example embodiment;
    FIG. 6 is a diagram to describe an AIS traffic statistical model according to an example embodiment;
    FIG. 7 is a diagram illustrating a result of imaging acquisition re-planning according to an example embodiment; and
    FIG. 8 is a flowchart illustrating a satellite imaging acquisition re-planning method according to an example embodiment.

DETAILED DESCRIPTION

Hereinafter, example embodiments will be described in detail with reference to the accompanying drawings.

The terminology used herein is for the purpose of describing particular example embodiments only and is not to be limiting of the example embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the example embodiments with reference to the accompanying drawings, like reference numerals refer to like constituent elements and a repeated description related thereto will be omitted. In the description of example embodiments, detailed description of well-known related structures or functions will be omitted when it is deemed that such description will cause ambiguous interpretation of the present disclosure.

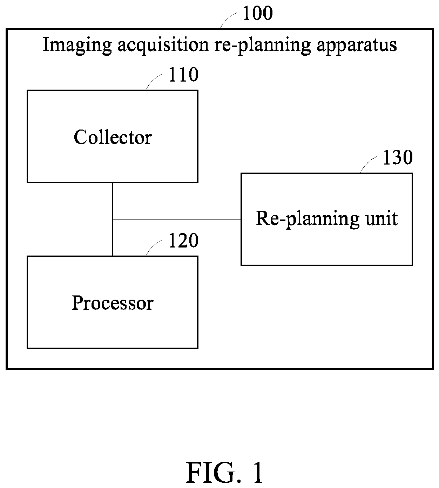

FIG. 1 is a block diagram illustrating a configuration of an apparatus for satellite imaging acquisition re-planning using ship automatic identification information according to an example embodiment.

Referring to FIG. 1, an apparatus for satellite imaging acquisition re-planning using ship automatic identification information (hereinafter, abbreviated as an "imaging acquisition re-planning apparatus") 100 may include a collector 110, a processor 120, and a re-planning unit 130.

First of all, upon arrival of a point in time for imaging a target area based on an imaging acquisition plan set in a satellite, the collector 110 may collect automatic identification system (AIS) information of ships generated in the target area. That is, the collector 110 may obtain data on a distribution of the ships in the target area immediately prior to performing imaging the target area on ground based on the imaging acquisition plan initially determined by a ground control station.

Here, AIS information may refer to the specification/operation information of a ship generated from the AIS adopted by the International Maritime Organization for voyage safety and security enhancement of a ship. AIS information may provide information related to a search site, a rescue site, and an assistive means of a port traffic service system when a marine accident occurs and may be utilized for monitoring in-operation ships in coastal sea area.

In addition, the target area may be a planned area to be imaged by a satellite-mounted camera and may be determined in advance by the ground control station or arbitrarily determined in case of emergency.

For example, when an imaging acquisition plan is set for a target area which is a southern area of the Korean peninsula at 10:00 Korean standard time (KST) by transmitting a command to Koreasat Mugunghwa, the collector 110 may collect AIS information on a current operation status of ships in southern sea of Korea from an AIS server.

In other words, for the target area, when a point in time for imaging approaches, the collector 110 may collect the AIS information on a distribution of the ships operating within the target area from the AIS server.

The processor 120 may estimate a weather condition in the target area by analyzing the AIS information. That is, based on the AIS information, the processor 120 may identify movements of ships on sea waters in the target area and may assess whether a weather condition in the target area is good or bad therefrom.

In the estimating of the weather condition in the target area, the processor 120 may estimate the weather condition by analyzing a movement of ships operating in the target area.

For this, the processor 120 may extract in-operation ship observation information on at least one of a number, positions, and moving directions of ships operating within the target area from the AIS information. That is, the processor 120 may identify in-operation ship observation information including a number of ships operating in offshore/open sea waters within sea waters in the target area according to the distances from inland, positions where the ships are clustered, and whether the ships are moving toward inland or open sea waters.

In addition, the processor 120 may determine an in-operation ship distribution in the target area by comparing the in-operation ship observation information to statistical information by weather conditions retained in an AIS traffic statistical model. That is, the processor 120 may determine an aspect of operations of ships in the target area by comparing the identified in-operation ship observation information to standard statistical information by weather conditions.

The AIS traffic statistical model may be a medium storing statistical information by weather conditions generated by probabilistically/statistically analyzing incidents occurring under a prescribed event.

The processor 120 may identify an in-operation ship distribution in a target area included in in-operation ship observation information using the statistical information by weather conditions.

Thereafter, the processor 120 may estimate a weather condition in the target area based on the in-operation ship distribution. That is, the processor 120 may estimate current weather in the target area by identifying a movement of ships through the in-operation ship distribution.

For example, if the in-operation ship distribution indicates that a plurality of ships is operating even in open sea waters far from inland, the processor 120 may estimate weather in the target area as "good".

On the other hand, if the in-operation ship distribution indicates that a plurality of ships is moving toward inland or no ships are in operation, the processor 120 may estimate weather in the target area as "bad".

In addition, if the in-operation ship distribution indicates that a small number of ships are operating in only offshore waters near inland, the processor 120 may estimate weather in the target area as "marginal" (with a high probability to be changed into bad soon).

In another example embodiment, the processor 120 may estimate a weather condition in a target area by learning.

For this, the processor 120 may extract in-operation ship observation information on at least one of a number, positions, and moving directions of ships operating within the target area from the AIS information.

Thereafter, the processor 120 may input the in-operation ship distribution into an AIS traffic training model and estimate a weather condition in the target area based on a result output from the AIS traffic training model. That is, the processor 120 may input the extracted in-operation ship observation information into the AIS traffic training model established based on deep learning and determine an output from the AIS traffic training model as the weather condition.

The AIS traffic training model may be a model established by deep learning about which weather condition may be frequently deducted according to a structure of information, based on a plurality of in-operation ship observation information.

The re-planning unit 130 may perform an imaging acquisition re-planning when it is determined that imaging by an electro-optic (EO) camera is impossible under the estimated weather condition. That is, the re-planning unit 130 may modify the initial imaging acquisition plan as the weather condition is estimated as "bad".

In the imaging acquisition re-planning, the re-planning unit 130 may determine whether an available payload capable of imaging under the weather condition is present. That is, the re-planning unit 130 may search an available payload capable of imaging under the estimated weather condition instead of the EO camera which is planned to be used for a present imaging acquisition. Here, the available payload may be an infrared (IR) camera or a synthetic aperture radar (SAR).

If a result of the determining indicates an available payload is absent, the re-planning unit 130 may perform the imaging acquisition re-planning to adjust the target area or the point in time for imaging. That is, if an available payload capable of imaging the target area under the "bad" weather condition is absent, the re-planning unit 130 may postpone the point in time for imaging for a predetermined time or may modify the plan to adjust the target area of the imaging acquisition.

In the above-described example of the Koreasat Mugunghwa, the re-planning unit 130 may perform the imaging acquisition re-planning to change the point in time for imaging to 16:00 KST or change the target area to southern inland of the Korean peninsula based on the determination that an available payload is absent.

On the other hand, if the result of the determining indicates an available payload is present, the re-planning unit 130 may perform the imaging acquisition re-planning to image the target area at the point in time for imaging by the available payload instead of the EO camera. That is, if an available payload capable of imaging the target area under the "bad" weather condition is present, the re-planning unit 130 may modify the plan to maintain the present point in time for imaging and the target area and only change a means of imaging by replacing the EO camera by the IR camera or the SAR.

In the above-described example of the Koreasat Mugunghwa, the re-planning unit 130 may perform the imaging acquisition re-planning to change a means of imaging from the EO camera to the IR camera or the SAR based on the determination that an available payload is present.

In another example embodiment of imaging acquisition re-planning, the re-planning unit 130 may transfer imaging acquisition to another satellite.

For this, when the satellite flies in affiliation with a satellite constellation, the re-planning unit 130 may perform the imaging acquisition re-planning to request another satellite within the satellite constellation, equipped with an available payload capable of imaging under the weather condition, to image the target area, via a communication within the satellite constellation.

That is, the re-planning unit 130 may find, among other satellites within the satellite constellation, a satellite having an available payload capable of imaging under the estimated weather condition and may perform the imaging acquisition re-planning to cause the satellite to image the target area at the point in time. Here, the satellite having the available payload may be a satellite with an IR camera or SAR capable of imaging the target area under the "bad" weather condition.

According to example embodiments, a method and apparatus for satellite imaging acquisition re-planning using ship automatic identification information may be provided to recognize a necessity for imaging acquisition re-planning in a satellite by estimating a weather condition in a target area based on identifying a current moving status of ships by analyzing the ship automatic identification information in real time.

In addition, as a result of the analyzing the ship automatic identification information, if a moving status of ships is determined that no ships are in operation or a small number of ships is in operation in predetermined sea waters which is the target area, the satellite itself may perform the imaging acquisition re-planning by estimating a deteriorating weather condition in predetermined sea waters.

In addition, an autonomy of utilizing an available payload of the satellite/the satellite constellation by weather conditions may be maximized.

The AIS may be a ship-mounted system to provide ship automatic identification information such as a position and an operation of a ship.

A specification of the AIS may include Tx Period '2~10 sec while underway, 6 min while anchored', and Tx Data 'Ship information, Cruise information (time, position, velocity, direction angle)'.

In case of Korea, an AIS receiver for a satellite is mounted to KOMPSAT-6 (to be launched in 2021) for a first time.

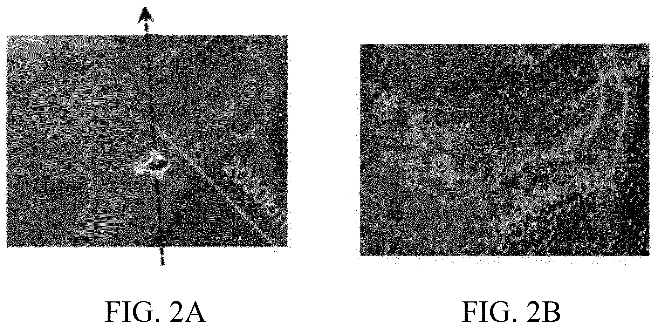

FIGS. 2A and 2B are diagrams illustrating examples of a valid reception range of a satellite-mounted automatic identification system (AIS) and AIS observation data of the Korean peninsula.

Observation data may include information received from a satellite-mounted AIS receiver on a position and a velocity of a ship. The satellite-mounted AIS receiver, for example, may use self-organized time division multiple access (SOTDMA) (2,250 slots/min per channel) as a communication protocol.

FIG. 2A illustrates an example of a satellite-mounted AIS with a valid reception area of a 700-km radius of a satellite.

FIG. 2B illustrates an example of a screen displaying positions of ships identified by the satellite-mounted AIS in dots. FIG. 2B shows a distribution of positions of ships in offshore waters of the Korean peninsula, included in an AIS traffic observation value.

A number of AIS-mounted in-port ships in Korea may be at least 420 ships per day.

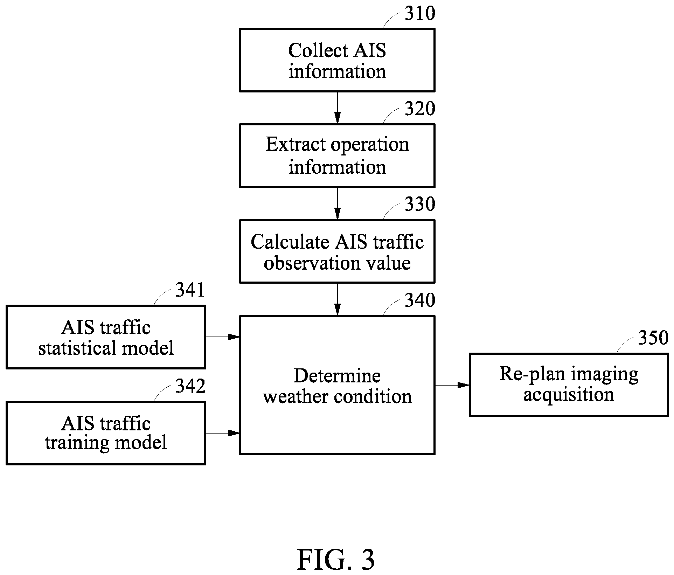

FIG. 3 is a diagram illustrating a process of satellite imaging acquisition re-planning.

In operation 310, the imaging acquisition re-planning apparatus 100 may collect AIS information. That is, prior to imaging, the imaging acquisition re-planning apparatus 100 may collect ship automatic identification information which is the AIS information with respect to a target area.

In operation 320, the imaging acquisition re-planning apparatus 100 may extract operation information. That is, the imaging acquisition re-planning apparatus 100 may extract a number, positions, velocities of ships in the target area by analyzing the AIS information. The operation information may include sizes (S), velocities (V), positions (P), and a number (N) of ships.

In operation 330, the imaging acquisition re-planning apparatus 100 may calculate an AIS traffic observation value. That is, the imaging acquisition re-planning apparatus 100 may calculate an in-operation ship distribution using the extracted number, positions, and velocities of ships. The AIS traffic observation value may indicate a distribution of operation information in latitude and longitude of an area of interest using current operation information.

In addition, the imaging acquisition re-planning apparatus 100 may determine an in-operation ship distribution observed in the target area by calculating the in-operation ship observation information by recognizing a current in-operation ship status in the target area through the AIS information. For a current AIS information service area, the in-operation ship observation information may include information on a distribution and a number of ships in operation according to latitude and longitude.

In operation 340, the imaging acquisition re-planning apparatus 100 may determine a current weather condition in the target area based on the in-operation ship distribution.

As an example embodiment of determining the current weather condition, the imaging acquisition re-planning apparatus 100 may determine the weather condition by comparing the in-operation ship observation information and an AIS traffic statistical model 341.

The imaging acquisition re-planning apparatus 100 may determine the weather condition in the target area by comparing a number, a distribution, velocities of ships in operation extracted from the in-operation ship observation information with a number, a distribution, velocities of ships retrieved from the AIS traffic statistical model 341.

The imaging acquisition re-planning apparatus 100 may calculate coherence between an observation value and statistical models by weather conditions and may output a corresponding weather condition by determining a statistical model with a highest coherence.

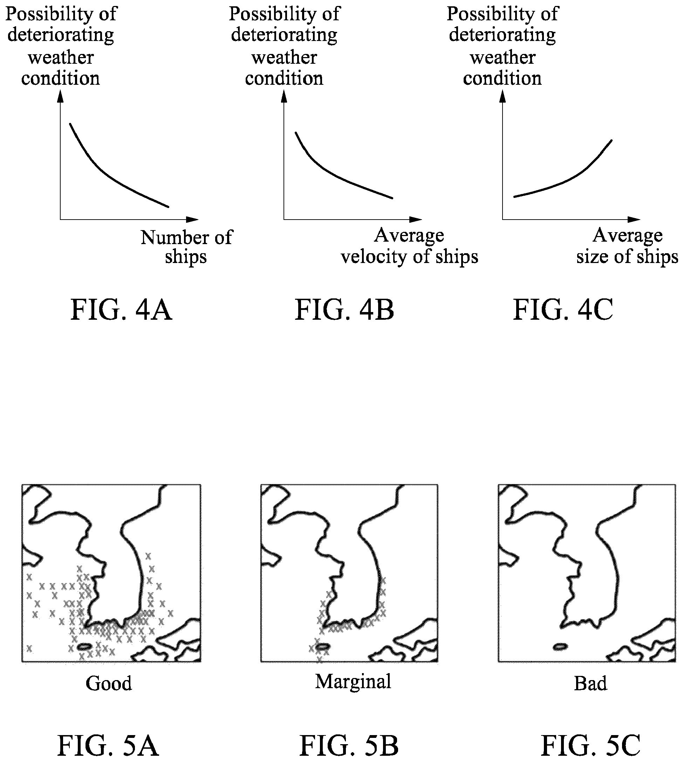

FIGS. 4A, 4B, and 4C are diagrams illustrating coherence with weather conditions based on AIS information according to an example embodiment.

FIGS. 4A, 4B, and 4C illustrate examples of coherence between AIS information and weather conditions in an area of interest. Here, the AIS information in the area of interest may include a number, velocities and sizes of ships.

FIG. 4A is a graph showing that as a number of ships in observation decreases, a possibility of deteriorating weather condition increases. That is, if a weather condition is bad, an operation of a ship may be refrained. Thus, the imaging acquisition re-planning apparatus 100 may estimate a deteriorating weather condition in an area of interest in inverse proportion to a decrease in the number of ships.

FIG. 4B is a graph showing that as an average velocity of ships in observation decreases, a possibility of deteriorating weather condition increases. That is, if a weather condition is bad, a ship may not be operated in a normal velocity. Thus, the imaging acquisition re-planning apparatus 100 may estimate the deteriorating weather condition in an area of interest in inverse proportion to a decrease in the average velocity of ships.

FIG. 4C is a graph showing that as an average size of ships in observation increases, a possibility of deteriorating weather condition increases. That is, if a weather condition is bad, only big-sized ships may be operated. Thus, the imaging acquisition re-planning apparatus 100 may estimate a deteriorating weather condition in an area of interest in proportion to an increase in the average size of ships.

FIGS. 5A, 5B, and 5C are diagrams illustrating in-operation ship distributions based on in-operation ship observation information.

In FIGS. 5A, 5B, and 5C, a mark x may refer to a ship equipped with an AIS.

FIG. 5A shows an in-operation ship distribution displaying ships operating in offshore waters as well as in open sea waters based on in-operation ship observation information. According to FIG. 5A, it may be inferred that a weather condition is good (clear, light wind) and a plurality of ships is freely operating.

FIG. 5B shows an in-operation ship distribution displaying ships operating only in offshore waters based on in-operation ship observation information. According to FIG. 5B, it may be inferred that a weather condition is marginal (cloudy, moderate wind) and ships are limitedly operating in offshore waters near land.

FIG. 5C shows an in-operation ship distribution with no ships in operation based on in-operation ship observation information. According to FIG. 5C, it may be inferred that a weather condition is bad (heavy rain, strong wind) and ships cannot be in operation.

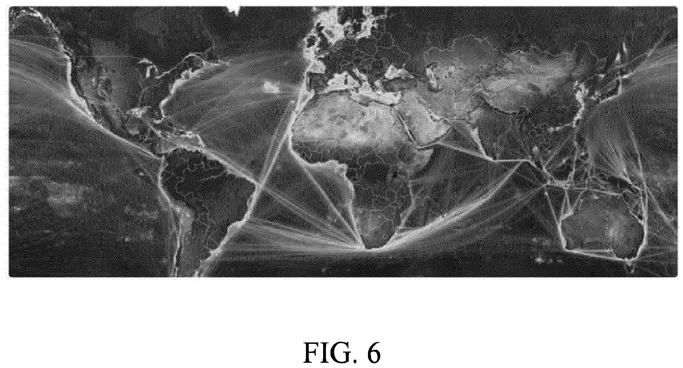

FIG. 6 is a diagram to describe an AIS traffic statistical model.

As shown in FIG. 6, the AIS traffic statistical model 341 may store information on a number, a distribution, velocities, and paths of ships operating in all sea waters in the world and thereby visually show a frequency of operations of ships in the worldwide sea waters.

The AIS traffic statistical model 341 may store statistical information by weather conditions on a worldwide AIS-mounted ship operation distribution. The AIS traffic statistical model 341 may include a detailed database based on weather conditions (cloud, rain). The AIS traffic statistical model 341 may be used for predicting a number and a distribution of ships in an area of interest.

For example, for the in-operation ship observation information of FIG. 5A showing a plurality of in-operation ships distributed in offshore waters and open sea waters, the imaging acquisition re-planning apparatus 100 may determine a weather condition as good.

In addition, for the in-operation ship observation information of FIG. 5B having in-operation ships limitedly distributed only in offshore waters, the imaging acquisition re-planning apparatus 100 may determine a weather condition as marginal.

In addition, for the in-operation ship observation information of FIG. 5C having no ships in operation, the imaging acquisition re-planning apparatus 100 may determine a weather condition as bad.

In addition, the AIS traffic statistical model 341 may be a statistical database for a traffic distribution (latitude, longitude) of AIS ships based on weather conditions (such as clear, cloudy, rain). The AIS traffic statistical model 341 may include AIS traffic information of a predetermined country or the world. The AIS traffic statistical model 341 may include a detailed database based on not only weather conditions but also seasons. The AIS traffic statistical model 341 may be used for predicting a distribution of ships in an area of interest.

As per Equation 1, the AIS traffic statistical model 341 may output distribution information on a number, positions, velocities, sizes of ships in an area of interest when receiving a weather condition (W) as an input.

[Equation 1]

$$[N, P, V, S] = F(W)$$

Here, $F()$ may denote the AIS traffic statistical model 341. $W$ may denote a distribution of weather conditions. $N$ may denote a distribution of numbers of ships. $P$ may denote a distribution of positions of ships. $V$ may denote a distribution of velocities of ships and $S$ may denote a distribution of sizes of ships.

As another example embodiment of determining a current weather condition, the imaging acquisition re-planning apparatus 100 may determine a weather condition by inputting in-operation ship observation information into an AIS traffic training model 342.

The AIS traffic training model 342 may be generated using a weather condition and the corresponding AIS traffic statistical model 341.

An input to the AIS traffic training model 342 may be an AIS traffic observation value, and an output from the AIS traffic training model 342 may be a current weather condition.

The AIS traffic training model 342 may be generated by artificial intelligence (AI), machine learning, and deep learning.

Referring back to FIG. 3, in operation 350, the imaging acquisition re-planning apparatus 100 may perform imaging acquisition re-planning when a current weather condition is determined as a deteriorating weather condition. That is, the imaging acquisition re-planning apparatus 100 may support a satellite to perform imaging acquisition re-planning by itself when imaging the target area by the EO camera is impossible in accordance with a weather condition.

In the imaging acquisition re-planning, the imaging acquisition re-planning apparatus 100 may perform the imaging acquisition re-planning by causing another payload (the IR camera, the SAR) mounted on the same satellite to image the target area instead.

In addition, the imaging acquisition re-planning apparatus 100 may perform image acquisition re-planning by abandoning the target area and determining another area, set for a spare acquisition, as a new target area to maximize power and memory resource utilization.

The imaging acquisition re-planning apparatus 100 may perform imaging acquisition re-planning to request another satellite equipped with an available payload (the IR camera, the SAR) via a communication within the satellite constellation.

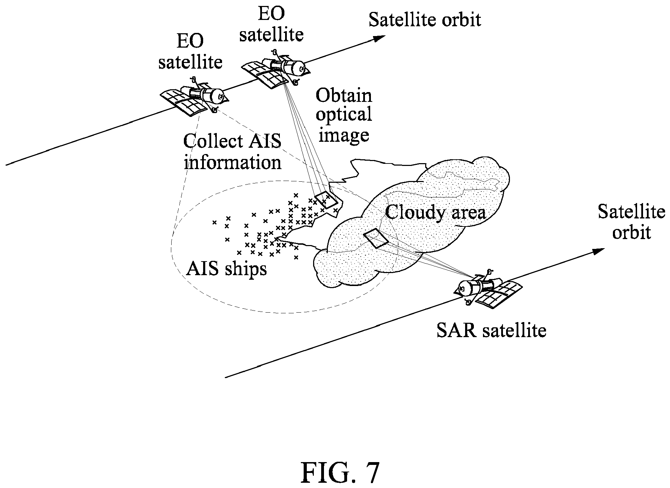

FIG. 7 is a diagram illustrating a result of imaging acquisition re-planning.

As shown in FIG. 7, the imaging acquisition re-planning apparatus 100 may collect AIS information and may identify an in-operation ship (AIS ship) distribution in a target area. In addition, the imaging acquisition re-planning apparatus 100 may estimate a weather condition in the target area based on the identified in-operation ship distribution and in case of a good weather condition, may perform an operation of imaging the target area based on a planned imaging acquisition by a satellite-mounted EO camera.

If the weather condition of the target area is estimated as bad based on the identified in-operation ship distribution, the imaging acquisition re-planning apparatus 100 may perform the imaging acquisition re-planning to obtain an optical image of the target area using the IR camera.

Alternatively, if the weather condition of the target area is estimated as cloudy, the imaging acquisition re-planning apparatus 100 may perform the imaging acquisition re-planning to obtain a radar image of the target area using the SAR.

Through this, the imaging acquisition re-planning apparatus 100 may maximize an autonomy of utilizing an available payload of a satellite/a satellite constellation by weather conditions.

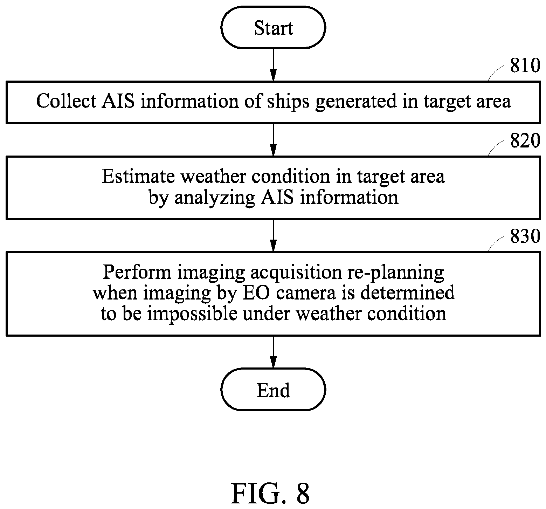

Hereinafter, FIG. 8 shows a workflow of the imaging acquisition re-planning apparatus 100 according to an example embodiment.

A satellite imaging acquisition re-planning method according to an example embodiment may be performed by the imaging acquisition re-planning apparatus 100.

FIG. 8 is a flowchart illustrating a satellite imaging acquisition re-planning method according to an example embodiment.

First of all, in operation 810, upon arrival of a point in time for imaging a target area based on an imaging acquisition plan in a satellite, the imaging acquisition re-planning apparatus 100 may collect AIS information of ships generated in the target area. Operation 810 may be a process to obtain data on a distribution of ships in the target area immediately prior to performing imaging the target area on ground based on the imaging acquisition plan initially determined by a ground control station.

Here, the AIS information may refer to the specification/operation information of a ship generated from the AIS adopted by the International Maritime Organization for voyage safety and security enhancement of a ship. AIS information may provide information related to a search site, a rescue site, and an assistive means of a port traffic service system when a marine accident occurs and may be utilized for monitoring in-operation ships in coastal sea area.

In addition, the target area may be a planned area to be imaged by a satellite-mounted camera and may be determined in advance by the ground control station or arbitrarily determined in case of emergency.

For example, when an imaging acquisition plan is set for a target area which is a southern area of the Korean peninsula at 10:00 KST by transmitting a command to Koreasat Mugunghwa, the imaging acquisition re-planning apparatus 100 may collect AIS information on a current operation status of ships in southern sea of Korea from an AIS server.

In other words, for the target area, when a point in time for imaging approaches, the imaging acquisition re-planning apparatus 100 may collect the AIS information on a distribution of the ships operating within the target area from the AIS server.

In addition, in operation 820, the imaging acquisition re-planning apparatus 100 may estimate a weather condition in the target area by analyzing the AIS information. Operation 820 may be a process, based on the AIS information, to identify a movement of ships on sea waters in the target area and assess whether a weather condition in the target area is good or bad therefrom.

In the estimating of the weather condition in the target area, the imaging acquisition re-planning apparatus 100 may estimate the weather condition by analyzing a movement of ships operating in the target area.

For this, the imaging acquisition re-planning apparatus 100 may extract in-operation ship observation information on at least one of a number, positions, and moving directions of ships operating within the target area from the AIS information. That is, the imaging acquisition re-planning apparatus 100 may identify in-operation ship observation information including a number of ships operating in offshore/open sea waters within sea waters in the target area according to the distances from inland, positions where the ships are clustered, and whether the ships are moving toward inland or open sea waters.

In addition, the imaging acquisition re-planning apparatus 100 may determine an in-operation ship distribution in the target area by comparing the in-operation ship observation information to statistical information by weather conditions retained in an AIS traffic statistical model. That is, the imaging acquisition re-planning apparatus 100 may determine an aspect of operations of ships in the target area by comparing the identified in-operation ship observation information to standard statistical information by weather conditions.

The AIS traffic statistical model may be a medium storing statistical information by weather conditions generated by probabilistically/statistically analyzing incidents occurring under a prescribed event.

The imaging acquisition re-planning apparatus 100 may identify an in-operation ship distribution in the target area included in in-operation ship observation information using the statistical information by weather conditions.

Thereafter, the imaging acquisition re-planning apparatus 100 may estimate a weather condition in the target area based on the in-operation ship distribution. That is, the imaging acquisition re-planning apparatus 100 may estimate current weather in the target area by identifying a movement of ships through the in-operation ship distribution.

For example, if the in-operation ship distribution indicates that a plurality of ships is operating even in open sea waters far from inland, the imaging acquisition re-planning apparatus 100 may estimate weather in the target area as "good".

On the other hand, if the in-operation ship distribution indicates that a plurality of ships is moving toward inland or no ships are in operation, the imaging acquisition re-planning apparatus 100 may estimate weather in the target area as "bad".

In addition, if the in-operation ship distribution indicates that a small number of ships are operating in only offshore waters near inland, the imaging acquisition re-planning apparatus 100 may estimate weather in the target area as "marginal" (with a high probability to be changed into bad soon).

In another example embodiment, the imaging acquisition re-planning apparatus 100 may estimate a weather condition in the target area by learning.

For this, the imaging acquisition re-planning apparatus 100 may extract in-operation ship observation information on at least one of a number, positions, and moving directions of ships operating within the target area from the AIS information.

Thereafter, the imaging acquisition re-planning apparatus 100 may input the in-operation ship distribution into an AIS traffic training model and estimate a weather condition in the target area based on a result output from the AIS traffic training model. That is, the imaging acquisition re-planning apparatus 100 may input the extracted in-operation ship observation information into the AIS traffic training model established based on deep learning and determine an output from the AIS traffic training model as the weather condition.

The AIS traffic training model may be a model established by deep learning about which weather condition may be frequently deducted according to a structure of information, based on a plurality of in-operation ship observation information.

In operation 830, the imaging acquisition re-planning apparatus 100 may perform an imaging acquisition re-planning when it is determined that imaging by an EO camera is impossible under the estimated weather condition. Operation 830 may be a process to modify the initial imaging acquisition plan as the weather condition is estimated as "bad".

In the imaging acquisition re-planning, the imaging acquisition re-planning apparatus 100 may determine whether an available payload capable of imaging under the weather condition is present. That is, the imaging acquisition re-planning apparatus 100 may search an available payload capable of imaging under the estimated weather condition instead of the EO camera which is planned to be used for a present imaging acquisition. Here, the available payload may be an IR camera or a SAR.

If a result of the determining indicates an available payload is absent, the imaging acquisition re-planning apparatus 100 may perform the imaging acquisition re-planning to adjust the target area or the point in time for imaging. That is, if an available payload capable of imaging the target area under the "bad" weather condition is absent, the imaging acquisition re-planning apparatus 100 may postpone the point in time for imaging for a predetermined time or may modify the plan to adjust the target area of the imaging acquisition.

In the above-described example of the Koreasat Mugunghwa, the imaging acquisition re-planning apparatus 100 may perform the imaging acquisition re-planning to change the point in time for imaging to 16:00 KST or change the target area to southern inland of the Korean peninsula based on the determination that an available payload is absent.

On the other hand, if the result of the determining indicates an available payload is present, the imaging acquisition re-planning apparatus 100 may perform the imaging acquisition re-planning to image the target area at the point in time for imaging by the available payload instead of the EO camera. That is, if an available payload capable of imaging the target area under the "bad" weather condition is present, the imaging acquisition re-planning apparatus 100 may modify the plan to maintain the present point in time for imaging and the target area and only change a means of imaging by replacing the EO camera by the IR camera or the SAR.

In the above-described example of the Koreasat Mugunghwa, the imaging acquisition re-planning apparatus 100 may perform imaging acquisition re-planning to change a means of imaging from the EO camera to the IR camera or the SAR based on the determination that an available payload is absent.

In another example embodiment of imaging acquisition re-planning, the imaging acquisition re-planning apparatus 100 may transfer the imaging acquisition to another satellite.

For this, when the satellite flies in affiliation with a satellite constellation, the imaging acquisition re-planning apparatus 100 may perform the imaging acquisition re-planning to request another satellite within the satellite constellation, equipped with an available payload capable of imaging under the weather condition, to image the target area, via a communication within the satellite constellation.

That is, the imaging acquisition re-planning apparatus 100 may find, among other satellites within the satellite constellation, a satellite having an available payload capable of imaging under the estimated weather condition and may perform the imaging acquisition re-planning to cause the satellite to image the target area at the point in time. Here, the satellite having the available payload may be a satellite with an IR camera or SAR capable of imaging the target area under the "bad" weather condition.

According to example embodiments, a method and apparatus for satellite imaging acquisition re-planning using ship automatic identification information may be provided to recognize a necessity for imaging acquisition re-planning in a satellite by estimating a weather condition in a target area based on identifying a current moving status of ships by analyzing the ship automatic identification information in real time.

In addition, as a result of the analyzing the ship automatic identification information, if a moving status of ships is determined that no ships are in operation or a small number of ships is in operation in predetermined sea waters which is the target area, the satellite itself may perform the imaging acquisition re-planning by estimating a deteriorating weather condition in predetermined sea waters.

In addition, an autonomy of utilizing an available payload of the satellite/the satellite constellation by weather conditions may be maximized.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter. The above-described devices may be configured to act as one or more software modules in order to perform the operations of the above-described example embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or pseudo equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

A number of example embodiments have been described above. Nevertheless, it should be understood that various modifications may be made to these example embodiments that fall within the scope of the claims.

Accordingly, other implementations are within the scope of the following claims.

## Claims

1. A method for satellite imaging acquisition re-planning using ship automatic identification information, the method comprising:

   upon arrival of a point in time for imaging a target area based on an imaging acquisition plan set in a satellite,
   collecting automatic identification system (AIS) information of a ship generated in the target area;
   estimating a weather condition in the target area by analyzing the AIS information; and
   performing an imaging acquisition re-planning when it is determined that imaging by an electro-optic (EO) camera is impossible under the estimated weather condition.

2. The method of claim 1, wherein the estimating of the weather condition comprises:

   extracting in-operation ship observation information on at least one of a number, positions, and moving directions of ships operating within the target area from the AIS information;
   determining an in-operation ship distribution in the target area by comparing the in-operation ship observation information to statistical information by weather conditions retained in an AIS traffic statistical model; and
   estimating a weather condition in the target area based on the in-operation ship distribution.

3. The method of claim 1, wherein the estimating of the weather condition comprises:

   extracting in-operation ship observation information on at least one of a number, positions, and moving directions of ships operating within the target area from the AIS information; and
   inputting the in-operation ship observation information into an AIS traffic training model and estimating a weather condition in the target area based on a result output from the AIS traffic training model.

4. The method of claim 1, wherein the performing of the imaging acquisition re-planning comprises:

   determining whether an available payload capable of imaging under the weather condition is present, wherein the available payload is an infrared (IR) camera or a synthetic aperture radar (SAR); and
   if a result of the determining is the available payload is absent, performing the imaging acquisition re-planning to adjust the target area or the point in time for imaging; or
   if the result of the determining is the available payload is present, performing the imaging acquisition re-planning to image the target area at the point in time for imaging by the available payload instead of the EO camera.

5. The method of claim 1, wherein when the satellite flies in affiliation with a satellite constellation, the performing of the imaging acquisition re-planning comprises performing the imaging acquisition re-planning to request another satellite within the satellite constellation, equipped with an available payload capable of imaging under the weather condition, to image the target area, via a communication within the satellite constellation.

6. An apparatus (100) for satellite imaging acquisition re-planning using ship automatic identification information comprising:

   a collector (110) configured to collect, upon arrival of a point in time for imaging a target area based on an imaging acquisition plan set in a satellite, automatic identification system (AIS) information of a ship generated in the target area;
   a processor (120) configured to estimate a weather condition in the target area by analyzing the AIS information; and
   a re-planning unit (130) configured to perform an imaging acquisition re-planning when it is determined that imaging by an electro-optic (EO) camera is impossible under the estimated weather condition.

7. The apparatus of claim 6, wherein the processor is configured to:

   extract in-operation ship observation information on at least one of a number, positions, and moving directions of ships operating within the target area from the AIS information,
   determine an in-operation ship distribution in the target area by comparing the in-operation ship observation information to statistical information by weather conditions retained in an AIS traffic statistical model, and
   estimate a weather condition in the target area based on the in-operation ship distribution.

8. The apparatus of claim 6, wherein the processor is configured to:

extract in-operation ship observation information on at least one of a number, positions, and moving directions of ships operating within the target area from the AIS information, and

input the in-operation ship observation information into an AIS traffic training model and estimate a weather condition in the target area based on a result output from the AIS traffic model.

9. The apparatus of claim 6, wherein the re-planning unit is configured to:

determine whether an available payload capable of imaging under the weather condition is present, wherein the available payload is an infrared (IR) camera or a synthetic aperture radar (SAR); and

if a result of the determining is the available payload is absent, perform the imaging acquisition re-planning to adjust the target area or the point in time for imaging; or

if the result of the determining is the available payload is present, perform the imaging acquisition re-planning to image the target area at the point in time for imaging by the available payload instead of the EO camera.

10. The apparatus of claim 6, wherein when the satellite flies in affiliation with a satellite constellation, the re-planning unit performs the imaging acquisition re-planning to request another satellite within the satellite constellation, equipped with an available payload capable of imaging under the weather condition, to image the target area, via a communication within the satellite constellation.

11. A non-transitory computer-readable storage medium storing instructions that, when executed by a processor, cause the processor to perform the method of claim 1.


**Patentansprüche**

1. Verfahren zur Neuplanung von Satellitenbildaufnahmen unter Verwendung von Informationen zur automatischen Identifizierung von Schiffen, wobei das Verfahren umfasst:

bei Erreichen eines Zeitpunkts zur Abbildung eines Zielgebiets auf Grundlage eines in einem Satelliten eingestellten Abbildungserfassungsplans,

Sammeln von Informationen eines automatischen Identifikationssystems (AIS) eines Schiffes, welche in dem Zielgebiet erzeugt wurden;

Abschätzen einer Wetterbedingung im Zielgebiet durch Analysieren der AIS-Informationen; und

Durchführen einer Neuplanung der Bildaufnahme, wenn festgestellt wird, dass eine Bildaufnahme durch eine elektro-optische (EO) Kamera unter den abgeschätzten Wetterbedingungen unmöglich ist.

2. Verfahren nach Anspruch 1, wobei das Abschätzen der Wetterbedingungen umfasst:

Extrahieren von Informationen über in Betrieb befindliche Schiffe aus den AIS-Informationen über eine Anzahl, Positionen und/oder Bewegungsrichtungen von Schiffen, die innerhalb des Zielgebiets operieren;

Bestimmen einer Verteilung von in Betrieb befindlichen Schiffen in dem Zielgebiet durch Vergleichen der Informationen über die in Betrieb befindlichen Schiffe mit statistischen Informationen über Wetterbedingungen, die in einem statistischen AIS-Verkehrsmodell gespeichert sind; und

Abschätzen einer Wetterbedingung in dem Zielgebiet auf Grundlage der Verteilung der in Betrieb befindlichen Schiffe.

3. Verfahren nach Anspruch 1, wobei das Abschätzen der Wetterlage umfasst:

Extrahieren von Beobachtungsinformationen zu in Betrieb befindlichen Schiffen über eine Anzahl, Positionen und/oder Bewegungsrichtungen von Schiffen, die innerhalb des Zielgebiets operieren, aus den AIS-Informationen; und

Eingeben der Beobachtungsinformationen zu in Betrieb befindlichen Schiffen in ein AIS-Verkehrstrainingsmodell und Abschätzen einer Wetterbedingung in dem Zielgebiet auf der Grundlage einer Ergebnisausgabe des AIS-Verkehrstrainingsmodells.

4. Verfahren nach Anspruch 1, wobei die Durchführung der Neuplanung der Bilderfassung umfasst:

Bestimmen, ob eine verfügbare Nutzlast, die in der Lage ist, unter den Wetterbedingungen Bilder zu liefern, vorhanden ist, wobei die verfügbare Nutzlast eine Infrarotkamera (IR) oder ein Radar mit synthetischer Apertur (SAR) ist; und

wenn ein Ergebnis der Bestimmung ist, dass die verfügbare Nutzlast nicht vorhanden ist, Durchführen der Neuplanung der Bildaufnahme, um das Zielgebiet oder den Zeitpunkt für die Bildaufnahme anzupassen; oder

wenn das Ergebnis der Bestimmung ist, dass die verfügbare Nutzlast vorhanden ist, Durchführen der Neuplanung der Bildaufnahme, um das Zielgebiet zu dem Zeitpunkt für die Bildaufnahme durch die verfügbare Nutzlast anstelle der EO-Kamera abzubilden.

5. Verfahren nach Anspruch 1, wobei, wenn der Satellit in Verbindung mit einer Satellitenkonstellation fliegt, die Durchführung der Neuplanung der Bildaufnahme die Durchführung der Neuplanung der Bildaufnahme derart umfasst, um einen anderen Satelliten innerhalb der Satellitenkonstellation, der mit einer verfügbaren Nutzlast ausgestattet ist, die unter den Wetterbedingungen zur Bildaufnahme fähig ist, über eine Kommunikation innerhalb der Satellitenkonstellation aufzufordern, das Zielgebiet abzubilden.

6. Vorrichtung (100) zur Neuplanung einer Satellitenbildaufnahme unter Verwendung automatischer Schiffsidentifikationsinformationen, umfassend:

einen Kollektor (110), der so konfiguriert ist, dass er bei Erreichen eines Zeitpunkts zur Abbildung eines Zielgebiets auf der Grundlage eines in einem Satelliten eingestellten Abbildungserfassungsplans Informationen eines automatischen Identifikationssystems (AIS) eines Schiffs, welche im Zielgebiet erzeugt wurden, sammelt;
einen Prozessor (120), der so konfiguriert ist, dass er eine Wetterbedingung in dem Zielgebiet durch Analysieren der AIS-Informationen abschätzt; und
eine Neuplanungseinheit (130), die so konfiguriert ist, dass sie eine Neuplanung der Bildaufnahme durchführt, wenn festgestellt wird, dass eine Bildaufnahme durch eine elektro-optische (EO) Kamera unter den abgeschätzten Wetterbedingungen unmöglich ist.

7. Die Vorrichtung nach Anspruch 6, wobei der Prozessor konfiguriert ist zum:

Extrahieren von Beobachtungsinformationen über in Betrieb befindliche Schiffe aus den AIS-Informationen über eine Anzahl, Positionen und/oder Bewegungsrichtungen von Schiffen, die innerhalb des Zielgebiets operieren,
Bestimmen einer Verteilung von in Betrieb befindlichen Schiffen in dem Zielgebiet durch Vergleichen der Beobachtungsinformationen über die in Betrieb befindlichen Schiffe mit statistischen Informationen über Wetterbedingungen, die in einem statistischen AIS-Verkehrsmodell gespeichert sind, und
Abschätzen einer Wetterbedingung im Zielgebiet auf Grundlage der Verteilung der in Betrieb befindlichen Schiffe.

8. Die Vorrichtung nach Anspruch 6, wobei der Prozessor konfiguriert ist zum:

Extrahieren von Beobachtungsinformationen über in Betrieb befindliche Schiffe aus den AIS-Informationen über eine Anzahl, Positionen und/oder Bewegungsrichtungen von Schiffen, die innerhalb des Zielgebiets operieren, und Eingeben der Beobachtungsinformationen über in Betrieb befindliche Schiffe in ein AIS-Verkehrstrainingsmodell und Abschätzen einer Wetterbedingung in dem Zielgebiet auf der Grundlage eines von dem AIS-Verkehrsmodell ausgegebenen Ergebnisses.

9. Die Vorrichtung nach Anspruch 6, wobei die Neuplanungseinheit konfiguriert ist zum:

Bestimmen, ob eine verfügbare Nutzlast, die in der Lage ist, unter den Wetterbedingungen Bilder zu erzeugen, vorhanden ist, wobei die verfügbare Nutzlast eine Infrarotkamera (IR) oder ein Radar mit synthetischer Apertur (SAR) ist; und
wenn ein Ergebnis der Bestimmung ist, dass die verfügbare Nutzlast nicht vorhanden ist, Durchführen der Neuplanung der Bildaufnahme, um das Zielgebiet oder den Zeitpunkt für die Bildaufnahme anzupassen; oder
wenn das Ergebnis der Bestimmung ist, dass die verfügbare Nutzlast vorhanden ist, Durchführen der Neuplanung der Bildaufnahme, um das Zielgebiet zu dem Zeitpunkt für die Bildaufnahme durch die verfügbare Nutzlast anstelle der EO-Kamera abzubilden.

10. Vorrichtung nach Anspruch 6, wobei, wenn der Satellit in Verbindung mit einer Satellitenkonstellation fliegt, die Neuplanungseinheit die Neuplanung der Bildaufnahme durchführt, um einen anderen Satelliten innerhalb der Satellitenkonstellation, der mit einer verfügbaren Nutzlast ausgestattet ist, die unter den Wetterbedingungen zur Bildaufnahme fähig ist, über eine Kommunikation innerhalb der Satellitenkonstellation zur Bildaufnahme des Zielgebiets aufzufordern.

11. Nicht-transitorisches computerlesbares Speichermedium, das Anweisungen speichert, die, wenn sie von einem Prozessor ausgeführt werden, den Prozessor veranlassen, das Verfahren nach Anspruch 1 durchzuführen.

**Revendications**

1. Procédé de replanification d'acquisition d'imagerie par satellite utilisant des informations d'identification automatique de navire, le procédé comprenant:

à l'arrivée d'un instant donné pour l'imagerie d'une zone cible sur la base d'un plan d'acquisition d'imagerie établi dans un satellite, collecter des informations de système d'identification automatique (AIS) d'un navire générées dans la zone cible ;

estimer une condition météorologique dans la zone cible en analysant les informations AIS ; et

effectuer une replanification d'acquisition d'imagerie lorsqu'il est déterminé que l'imagerie par une caméra électro-optique (EO) est impossible dans la condition météorologique estimée.

2. Procédé selon la revendication 1, dans lequel estimer la condition météorologique comprend:

extraire des informations d'observation de navires en opération sur au moins un élément parmi un nombre, des positions et des directions de déplacement de navires opérant dans la zone cible à partir des informations AIS ;

déterminer une distribution de navires en opération dans la zone cible en comparant les informations d'observation de navires en opération à des informations statistiques par conditions météorologiques conservées dans un modèle statistique de trafic AIS ; et

estimer une condition météorologique dans la zone cible sur la base de la distribution de navires en opération.

3. Procédé selon la revendication 1, dans lequel estimer la condition météorologique comprend:

extraire des informations d'observation de navires en opération sur au moins un élément parmi un nombre, des positions et des directions de déplacement de navires opérant dans la zone cible à partir des informations AIS ; et

entrer les informations d'observation de navires en opération dans un modèle d'apprentissage de trafic AIS et estimer une condition météorologique dans la zone cible sur la base d'une sortie de résultats du modèle d'apprentissage de trafic AIS.

4. Procédé selon la revendication 1, dans lequel effectuer la replanification d'acquisition d'imagerie comprend:

déterminer si une charge utile disponible capable d'imager dans la condition météorologique est présente, la charge utile disponible étant une caméra infrarouge (IR) ou un radar à synthèse d'ouverture (SAR) ; et

si un résultat de la détermination est que la charge utile disponible est absente, effectuer la replanification d'acquisition d'imagerie pour ajuster la zone cible ou l'instant donné de l'imagerie ; ou

si le résultat de la détermination est que la charge utile disponible est présente, effectuer la replanification d'acquisition d'imagerie pour imager la zone cible à l'instant donné de l'imagerie par la charge utile disponible au lieu de la caméra EO.

5. Procédé selon la revendication 1, dans lequel, lorsque le satellite vole en affiliation avec une constellation de satellites, effectuer la replanification d'acquisition d'imagerie comprends effectuer la replanification d'acquisition d'imagerie en demandant à un autre satellite au sein de la constellation de satellites, équipé d'une charge utile disponible capable d'imager dans la condition météorologique, d'imager la zone cible, via une communication au sein de la constellation de satellites.

6. Appareil (100) de replanification d'acquisition d'imagerie par satellite utilisant des informations d'identification automatique de navire, comprenant :

un collecteur (110) configuré pour collecter, lors de l'arrivée d'un instant donné pour imager une zone cible sur la base d'un plan d'acquisition d'imagerie établi dans un satellite, des informations de système d'identification automatique (AIS) d'un navire générées dans la zone cible ;

un processeur (120) configuré pour estimer une condition météorologique dans la zone cible en analysant les informations AIS ; et

une unité de replanification (130) configurée pour effectuer une replanification d'acquisition d'imagerie lorsqu'il est déterminé que l'imagerie par une caméra électro-optique (EO) est impossible dans la condition météorologique estimée.

7. Appareil selon la revendication 6, dans lequel le processeur est configuré pour :

extraire des informations d'observation de navires en opération sur au moins un élément parmi un nombre, des positions et des directions de déplacement de navires opérant dans la zone cible à partir des informations AIS,

déterminer une distribution de navires en opération dans la zone cible en comparant les informations d'observation de navires en opération à des informations statistiques par conditions météorologiques conservées dans un modèle statistique de trafic AIS ; et

estimer une condition météorologique dans la zone cible sur la base de la distribution de navires en opération.

8. Appareil selon la revendication 6, dans lequel le processeur est configuré pour :

extraire des informations d'observation de navires en opération sur au moins un élément parmi un nombre, des positions et des directions de déplacement de navires opérant dans la zone cible à partir des informations AIS ; et

entrer les informations d'observation de navires en opération dans un modèle d'apprentissage de trafic AIS et estimer une condition météorologique dans la zone cible sur la base d'une sortie de résultats du modèle d'apprentissage de trafic AIS.

9. Appareil selon la revendication 6, dans lequel l'unité de replanification est configurée pour :

déterminer si une charge utile disponible capable d'imager dans la condition météorologique est présente, la charge utile disponible étant une caméra infrarouge (IR) ou un radar à synthèse d'ouverture (SAR) ; et

si un résultat de la détermination est que la charge utile disponible est absente, effectuer la replanification d'acquisition d'imagerie pour ajuster la zone cible ou l'instant donné de l'imagerie ; ou

si le résultat de la détermination est que la charge utile disponible est présente, effectuer la replanification d'acquisition d'imagerie pour imager la zone cible à l'instant donné de l'imagerie par la charge utile disponible au lieu de la caméra EO.

10. Appareil selon la revendication 6, dans lequel lorsque le satellite vole en affiliation avec une constellation de satellites, l'unité de replanification effectue la replanification d'acquisition d'imagerie en demandant à un autre satellite au sein de la constellation de satellites, équipé d'une charge utile disponible capable d'imager dans la condition météorologique, d'imager la zone cible, via une communication au sein de la constellation de satellites.

11. Support de stockage non transitoire lisible par ordinateur stockant des instructions qui, lorsqu'elles sont exécutées par un processeur, amènent le processeur à mettre en oeuvre le procédé selon la revendication 1.

FIG. 1

FIG. 2A

FIG. 2B

FIG. 3

Possibility of deteriorating weather condition

Number of ships

FIG. 4A

Possibility of deteriorating weather condition

Average velocity of ships

FIG. 4B

Possibility of deteriorating weather condition

Average size of ships

FIG. 4C

Good

FIG. 5A

Marginal

FIG. 5B

Bad

FIG. 5C

FIG. 6

FIG. 7

```
                        ┌─────────┐
                        │  Start  │
                        └────┬────┘
                             │              ╱ 810
    ┌────────────────────────▼───────────────────────┐
    │  Collect AIS information of ships generated in target area  │
    └────────────────────────┬───────────────────────┘
                             │              ╱ 820
    ┌────────────────────────▼───────────────────────┐
    │        Estimate weather condition in target area        │
    │              by analyzing AIS information               │
    └────────────────────────┬───────────────────────┘
                             │              ╱ 830
    ┌────────────────────────▼───────────────────────┐
    │        Perform imaging acquisition re-planning          │
    │       when imaging by EO camera is determined           │
    │        to be impossible under weather condition         │
    └────────────────────────┬───────────────────────┘
                             │
                        ┌────▼────┐
                        │   End   │
                        └─────────┘
```

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017048339 A1